# EUROPEAN PATENT APPLICATION

(11) **EP 3 398 707 A1**
(43) Date of publication of application: **07.11.2018**
(21) Application number: 18170543.5
(22) Date of filing: 03.05.2018
(51) Int. Cl.: B23K 9/09, B23K 9/095, B23K 9/10

(54) **WELDING POWER SUPPLY WITH ADJUSTABLE RESISTANCE**

(30) Priority: 03.05.2017 US 201715585298
(71) Applicant: Lincoln Global, Inc., Santa Fe Springs, CA 90670 (US)
(72) Inventor: Henry, Judah Benjamin, Painesville, OH Ohio 44077 (US); Fleming, Daniel P., Painesville, OH Ohio 44077 (US)
(74) Representative: Grosse Schumacher Knauer von Hirschhausen

(57) **Abstract**

A welding system (10, 70) includes a consumable welding electrode (16), a feeder (40) that advances the consumable welding electrode (16) toward a weld puddle during a welding operation, and a power supply (12, 72) configured to provide a series of welding waveforms to the consumable welding electrode (16) to generate a welding current in the consumable welding electrode (16). An individual welding waveform of said series includes a predetermined minimum current portion, a peak current portion, and a background current portion having a magnitude that is greater than the minimum current portion and less than the peak current portion. The power supply (12, 72) comprises an adjustable resistance (20) for setting a magnitude of the minimum current portion. The adjustable resistance (20) is connected in series with the consumable welding electrode (16) such that the minimum current portion of the welding current flows through the adjustable resistance (20).

## Description

### FIELD OF THE INVENTION

The invention is related to a welding system according to claims 1, 7 and 12. Embodiments of the present invention relate to electric arc welders, and in particular to electric arc welders that are capable of generating welding waveforms.

### TECHNICAL BACKGROUND

It is known to perform electric arc welding using periodic welding waveforms having pulses of current separated by lower current portions to achieve desired metal transfer and final weld properties. The periodic welding waveforms can be used in both pulse arc welding in which the welding electrode does not short against the workpiece, and in short circuit welding. One short circuit welding technique that uses periodic welding waveforms is Surface Tension Transfer (STT). In STT welding, a consumable wire electrode is energized by a welding power supply as it is driven toward a workpiece by a wire feeder. Background current establishes an arc between the wire electrode and the workpiece, and produces a molten ball at the end of the electrode. The molten ball is moved toward the workpiece by the wire feeder and eventually shorts against the workpiece, extinguishing the arc. A controlled pinch current that is greater than the background current causes the molten ball to pinch off from the wire electrode, and a subsequent plasma boost pulse is applied to the welding electrode to set the proper arc length and push the weld puddle away from the wire electrode. The various portions of the periodic welding waveform are repeated in sequence during welding under the control of a microprocessor-based controller, which controls the operation of high-frequency switching components (e.g., inverter, choppers, etc.) in the arc welder to produce the desired waveforms.

### DESCRIPTION

In order to improve the welding performance, especially during STT welding, a welding system according to claims 1, 7 and 12 is described. Preferred embodiments are subject of the subclaims. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a welding system. The welding system includes a consumable welding electrode, a feeder that advances the consumable welding electrode toward a weld puddle during a welding operation, and a power supply configured to provide a series of welding waveforms to the consumable welding electrode to generate a welding current in the consumable welding electrode. An individual welding waveform of said series includes a predetermined minimum current portion, a peak current portion, and a background current portion having a magnitude that is greater than the minimum current portion and less than the peak current portion. The power supply comprises an adjustable resistance for setting a magnitude of the minimum current portion. The adjustable resistance is connected in series with the consumable welding electrode such that the minimum current portion of the welding current flows through the adjustable resistance.

In accordance with another aspect of the present invention, provided is a welding system. The welding system includes a consumable welding electrode, a feeder that advances the consumable welding electrode toward a weld puddle during a welding operation, and a power supply configured to provide a series of welding waveforms to the consumable welding electrode to generate a welding current in the consumable welding electrode. An individual welding waveform of said series includes a predetermined minimum current portion, a peak current portion, and a background current portion having a magnitude that is greater than the minimum current portion and less than the peak current portion. The power supply comprises an output switch, an adjustable resistance connected in parallel with the output switch, and a controller operatively connected to both of the output switch and the adjustable resistance, and configured to control switching operations of the output switch between an on state and an off state, and to control a resistance level of the adjustable resistance. The output switch is in the on state during the peak current portion and the background portion of the welding current, such that the peak current portion and the background current portion flow through the output switch and through the consumable welding electrode, and the output switch is in the off state during the minimum current portion of the welding waveform such that the minimum current portion flows through adjustable resistance and through the consumable welding electrode.

In accordance with another aspect of the present invention, provided is a welding system. The welding system includes a welding electrode, a power supply configured to provide a series of welding waveforms to the welding electrode to generate a welding current in the welding electrode. An individual welding waveform of said series includes a predetermined minimum current portion, a peak current portion, and a background current portion having a magnitude that is greater than the minimum current portion and less than the peak current portion. The power supply comprises an output switch, an adjustable resistance comprising an array of individually switched resistances connected in parallel with the output switch, and a controller operatively connected to the output switch and to the array of individually switched resistances. The controller is configured to control switching operations of the output switch, and to control a resistance level of the adjustable resistance by controlling activation of the individually switched resistances. The controller controls switching operations of the output switch and activation of the individually switched resistances such that the peak current portion and the background current portion of the welding current flow through the output switch and the welding electrode, and the minimum current portion of the welding waveform flows through the adjustable resistance and the welding electrode.

### BRIEF DESCRIPTION OF THE DRAWING

FIG. 1 is a schematic diagram of an example welding system;
FIG. 2 is an example welding waveform;
FIG. 3 is a schematic diagram of a portion of the example welding system of Fig. 1;
FIG. 4 is a schematic diagram of a portion of the example welding system of Fig. 1; and
FIG. 5 is a schematic diagram of an example welding system.

### DETAILED DESCRIPTION

Embodiments of the present invention relate to electric arc welders capable of generating welding waveforms. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

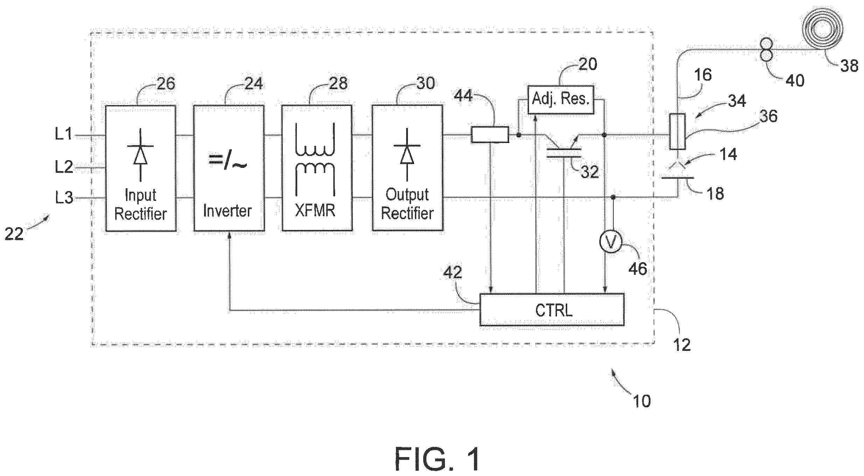

A schematic diagram of an example arc welding system 10 is shown in Fig. 1. The arc welding system 10 includes a welding power supply 12. The welding power supply 12 generates an electric arc 14 between a welding electrode 16 and a workpiece 18 to perform an arc welding operation. As will be discussed in detail below, the welding power supply 12 includes an adjustable resistance 20 at the power supply's output to the electrode 16, and the adjustable resistance 20 allows for selective adjustment of the minimum welding current delivered to the electrode. In particular, the magnitude of minimum current portions of welding waveforms provided to the electrode 20 can be controlled and adjusted via the adjustable resistance 20 (e.g., by increasing or decreasing the resistance level of the adjustable resistance).

For purposes of explanation, the invention is discussed in the context of an arc welding operation that uses a driven wire consumable electrode (e.g., gas metal arc welding (GMAW), flux-cored arc welding (FCAW), submerged arc welding (SAW)). However, it is to be appreciated that the invention is not limited to welding operations involving a driven wire electrode, and could be applicable to other types of arc welding, such as gas tungsten arc welding (GTAW) or shielded metal arc welding (SMAW).

Referring to Fig. 1, the welding power supply 12 receives electrical energy for generating the arc 14 from a power source 22, such as a commercial power source or a generator. The power source 22 can be a single phase or three phase power source. In certain embodiments, the arc welding system 10 can be a hybrid system that includes one or more batteries (not shown) that also supply energy to the welding power supply 22.

The welding power supply 12 includes a switching type power converter such as an inverter 24 for generating the arc 14 according to a desired welding waveform. Alternatively or additionally, the welding power supply could include a DC chopper (not shown) or boost converter (not shown) for generating welding waveforms. AC power from the power source 22 is rectified by an input rectifier 26. The DC output from the rectifier 26 is supplied to the inverter 24. The inverter 24 supplies high-frequency AC power to a transformer 28, and the output of the transformer is converted back to DC by an output rectifier 30. As will be discussed in detail below, the output rectifier 30 supplies the electrical power for generating the arc 24 through either an output switch 32 or through the adjustable resistance 20.

The arc welding system 10 can include a welding torch 34 that is operatively connected to the power supply 12. The power supply 12 supplies welding output electrical energy to the welding torch 34 to generate the arc 14 and perform the welding operation. In Fig. 1, the torch 34 has a contact tip 36 for transferring the electrical energy supplied by the power supply 12 to the electrode 16.

The electrode 16 is a consumable wire welding electrode. The electrode 16 can be fed from a spool 38 by a feeder 40 configured to advance the electrode toward a weld puddle during the welding operation. As shown schematically in Fig. 1, the feeder 40 can include motor-operated pinch rollers for driving the electrode 16 toward the torch 34.

The arc welding system 10 can be configured for direct current electrode positive (DC+) or "reverse" polarity wherein the contact tip 36 and electrode 16 are connected to a positive lead from the power supply 12, and the workpiece 18 is connected to a negative lead. Alternatively, the arc welding system 10 can be configured for direct current electrode negative (DC-) or "straight" polarity, wherein the workpiece 18 is connected to the positive lead and the contact tip 36 and electrode 16 are connected to the negative lead. Further, the arc welding system 10 can be configured for AC welding in which AC waveforms are provided to the contact tip 36, electrode 16 and workpiece 18.

The power supply 12 includes a controller 42 operatively connected to the inverter 24 for controlling the welding waveforms generated by the power supply. The controller 42 can provide a waveform control signal to the inverter 24 to control its output. The controller 42 controls the output of the inverter 24 via the waveform control signal, to achieve a desired welding waveform, welding voltage, welding current, etc. The waveform control signal can comprise a plurality of separate control signals for controlling the operation of various switches (e.g., transistor switches) within the inverter 24.

The controller 42 is also operatively connected to the output switch 32 to control its switching operations between an on state and an off state. The controller 42 is further operatively connected to the adjustable resistance 20 and can control the resistance level of the adjustable resistance via one or more output signals provided to the adjustable resistance 20.

It can be seen that the adjustable resistance 20 is connected in parallel with the output switch 32. When the output switch 32 is in the on state, the welding current flows through the output switch to the torch 34 and electrode 16. When in the on state, the output switch 32 effectively shorts out the adjustable resistance 20. When the output switch 32 is in an off state, the adjustable resistance 20 is connected in series with the torch 34 and consumable welding electrode 16, and the welding current flows through the adjustable resistance to the torch and electrode. The magnitude of the welding current can be quickly reduced to a low level that is determined by the adjustable resistance 20, by turning off the output switch 32 and forcing the welding current through the adjustable resistance 20. Moreover, by controlling the resistance level of the adjustable resistance 20, the controller can set the magnitude of minimum current portions of the welding waveform to various predetermined levels.

The controller 42 monitors aspects of the welding process via feedback signals. For example, a current sensor, such as a current transformer (CT) or shunt 44, can provide a welding current feedback signal to the controller 42, and a voltage sensor 46 can provide a welding voltage feedback signal to the controller.

The controller 42 can be an electronic controller and may include a processor. The controller 42 can include one or more of a microprocessor, a microcontroller, a digital signal processor (DSP), an application specific integrated circuit (ASIC), a field-programmable gate array (FPGA), discrete logic circuitry, or the like. The controller 42 can include a memory portion (e.g., RAM or ROM) storing program instructions that cause the controller to provide the functionality ascribed to it herein. The controller 42 can include a plurality of physically separate circuits or electronic devices, such as a processor in combination with separate comparators, logic circuits, etc. However, for ease of explanation, the controller 42 is shown as a monolithic device.

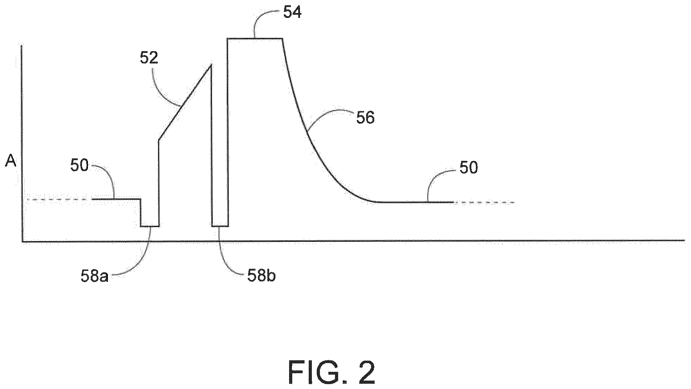

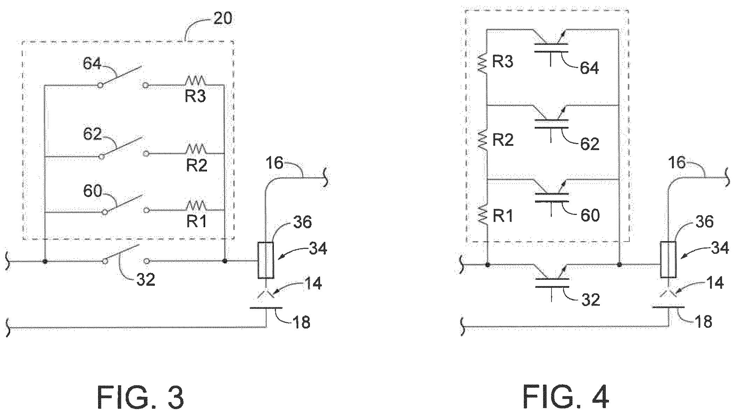

An example welding waveform that can be generated by the power supply 12 is shown in Fig. 2. The waveform in Fig. 2 is an STT waveform. However, the present invention is not limited to STT waveforms and would be applicable to any welding waveforms that would benefit from a quick transition from a higher current level to a lower, adjustable current level through the use of an adjustable resistance as discussed herein. For purposes of comparison, an example STT waveform is shown in Fig. 4. The STT waveform includes a background current portion 50, a pinch current portion 52, and a plasma boost pulse 54 followed by a tail out 56 to another background current portion. Between the background current portion 50 and the pinch current portion 52, and between the pinch current portion 52 and the plasma boost pulse 54, are predetermined minimum current portions 58a, 58b. It can be seen that the background current portion 50 has a greater magnitude than the minimum current portions 58a, 58b, but less than the pinch current portion 52 and the plasma boost pulse 54 (e.g., peak current portion of the example waveform). The output switch 32 (Fig. 1) is in the on state during the background 50, pinch 52 and plasma boost pulse 54 portions of the welding waveform, and the welding current flows through the output switch during these portions. The output switch 32 (Fig. 1) is in the off state during the minimum current portions 58a, 58b, and the welding current flows through the adjustable resistance 20 (Fig. 1) during the minimum current portions. The magnitude of the minimum current portions 58a, 58b are determined by the resistance level of the adjustable resistance 20 (Fig. 1) and the minimum current portions can have the same magnitude or different magnitudes from each other.

During the background current portion 50, a molten ball forms on the end of the electrode 16 (Fig. 1), and the electrode can short to the weld puddle. The controller can recognize the existence of the short by monitoring the welding voltage feedback signal. When a short is detected, the controller quickly reduces the welding current to the minimum current level by turning off the output switch 32 (Fig. 1). Reducing the welding current helps to ensure a solid short and avoids blowing apart the electrode like a fuse. After the first minimum current portion 58a, a pinch current 50 is applied through the output switch 32 (Fig. 1) to neck down the end of the electrode for separation into the weld puddle. Just before the short is cleared, the controller again turns off the output switch 32 (Fig. 1) to quickly reduce the welding current to the second minimum current portion 58b to prevent spatter when the molten ball pinches off of the electrode and to promote arc stability. When the arc is reestablished, the controller applies a peak current (plasma boost pulse 54) portion of the welding waveform, through the output switch 32 (Fig. 1), to set the proper arc length and push the weld puddle away from the wire electrode. The plasma boost pulse 54 is then tailed out 56 by the controller, to return the welding current to the background current 50 level. The STT waveform can be repeated or adjusted as desired during the welding operation.

An example adjustable resistance 20 for use in the power supply 12 (Fig. 1) is shown in Fig. 3. The adjustable resistance can include an array of individually switched resistances R1, R2, R3 connected in parallel. In the example shown in Fig. 3, the adjustable resistance 20 includes three individually switched resistances connected in parallel; however, the adjustable resistance could include more or fewer than three individually switched resistances, depending on the number of desired predetermined minimum current levels available for selection. The values or magnitudes of the resistors R1, R2, R3 can be different from each other or the same. Example values for the resistors are 50 Ohms or less, 20 Ohms or less (e.g., 20 Ohms, 15 Ohms, 10 Ohms, 5 Ohms, 2.5 Ohms, 1.25 Ohms, etc.) and 10 Ohms or less (e.g., 10 Ohms, 5 Ohms, 2.5 Ohms, 1.25 Ohms, etc.)

The activation of some or all of the resistors R1, R2, R3 can be controlled by respective switches 60, 62, 64. The operation of the switches 60, 62, 64, which can be transistor switches or other types of controllable switches, are controlled by the controller 42 (Fig. 1). In the example of Fig. 3, the adjustable resistor 20 comprises a series connection of a first transistor switch 60 and a first resistor R1, a series connection of a second transistor switch 62 and a second resistor R2, and a series connection of a third transistor switch 64 and a third resistor R3, with the series connection of the first transistor switch and the first resistor being connected in parallel with the series connection of the second transistor switch and the second resistor, and also connected in parallel with the series connection of the third transistor switch and the third resistor.

The controller can set the resistance level of the adjustable resistance 20 by selectively switching in one or more of the resistors R1, R2, R3, to thereby set the magnitude of the minimum current portions of the welding waveform. If the resistors R1, R2, R3 each have respective different resistance values (e.g., 5 Ohms, 2.5 Ohms, 1.25 Ohms), seven different minimum current magnitudes can be obtained by following combinations: R1 only, R2 only, R1 II R2 (R1 and R2 switched on = 1.67 Ohms), R3 only, R1 II R3 (R1 and R3 switched on = 1.0 Ohms), R2 II R3 (R2 and R3 switched on = 0.83 Ohms), and R1 II R2 II R3 (R1, R2, R3 switched on = 0.71 Ohms). If the power supply outputs 100 V, for example, with the resistor set up just described, the magnitude of the minimum current portions of the welding waveforms can be adjusted from 20A to 140A in 20A increments (20A, 40A, 60A, 80A, 100A, 120A, 140A). Adding additional individually switched resistors to the adjustable resistance will allow for the selection of more than seven different minimum current magnitudes for the welding waveform.

Returning to Fig. 1, the power supply 12 can include a user interface that allows the adjustable resistance 20 to be set manually by an operator. Alternatively or additionally, the controller 42 can automatically set the resistance level of the adjustable resistance 20, to thereby set the magnitude of minimum current portions of the welding waveform. The controller 42 can automatically adjust the resistance level of the adjustable resistance 20 based on one or more welding parameters. For example, at higher electrode wire feed speeds provided by the feeder 40, the controller 42 can set the adjustable resistance 20 to a lower level, to increase the minimum current level so that the electrode is adequately burned off the higher wire feed speed. Conversely, the controller 42 can automatically increase the resistance of the adjustable resistance 20 at lower wire feed speeds to reduce the minimum current level. Providing an adjustable minimum current level based on wire feed speed can improve welding performance (e.g., promote arc stability), in particular between pinch current portions and the plasma boost pulses during STT welding.

Figure 4 provides another example adjustable resistor 20. In Fig. 4, the switches are shown schematically as transistor switches, and the resistors R1, R2, R3 are connected for series operation.

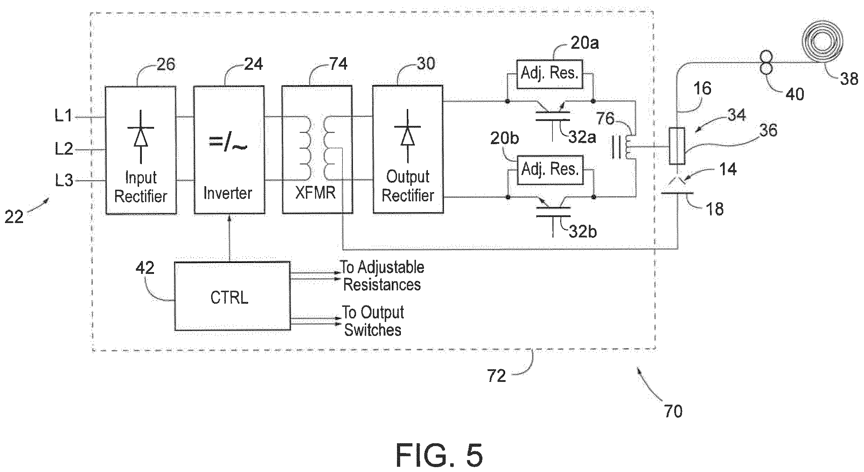

A schematic diagram of another example arc welding system 70 is shown in Fig. 5. In Fig. 5, the power supply 72 is configured for AC welding. The transformer 74 is a center-tapped transformer, and the center tap is connected to the workpiece. The power supply 72 has a first output switch 32a and a second output switch 32b supplied by the output rectifier 30. The operations of the output switches 32a, 32b are controlled by the controller 42. The output switches 32a, 32b can be connected to the welding torch and electrode 16 through an output choke 76 as shown. An adjustable resistance 20a, 20b is connected in parallel with each output switch 32a, 32b to set the predetermined minimum current magnitudes of the AC welding waveforms in the manner discussed above. The controller 42 controls the resistance level of both adjustable resistances 20a, 20b.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

**Reference numbers**

| | | | |
|---|---|---|---|
| 10 | arc welding system | 38 | spool |
| 12 | welding power supply | 40 | feeder |
| 14 | electric arc | 42 | controller |
| 16 | welding electrode | 44 | CT/shunt |
| 18 | workpiece | 46 | voltage sensor |
| 20 | adjustable resistance/resistor | 50 | background current portion |
| 20a | adjustable resistance | 52 | pinch current portion |
| 20b | adjustable resistance | 54 | plasma boost pulse |
| 22 | power source | 56 | tail out portion |
| 24 | inverter | 58a | minimum current portion |
| 26 | input rectifier | 58b | minimum current portion |
| 28 | transformer | 60 | switch |
| 30 | output rectifier | 62 | switch |
| 32 | output switch | 64 | switch |
| 32a | output switch | 70 | arc welding system |
| 32b | output switch | 72 | power supply |
| 34 | welding torch | 74 | transformer |
| 36 | contact tip | 76 | output choke |
| | | R1 | resistance |
| | | R2 | resistance |
| | | R3 | resistance |

## Claims

1. A welding system (10, 70), comprising:
a consumable welding electrode (16);
a feeder (40) that advances the consumable welding electrode (16) toward a weld puddle during a welding operation; and
a power supply (12, 72) configured to provide a series of welding waveforms to the consumable welding electrode (16) to generate a welding current in the consumable welding electrode (16), wherein an individual welding waveform of said series includes:
a predetermined minimum current portion;
a peak current portion; and
a background current portion having a magnitude that is greater than the minimum current portion and less than the peak current portion,
wherein the power supply (12, 72) comprises an adjustable resistance (20) for setting a magnitude of the minimum current portion, and the adjustable resistance (20) is connected in series with the consumable welding electrode (16) such that the minimum current portion of the welding current flows through the adjustable resistance (20).

2. The welding system (10, 70) of claim 1, further comprising an output switch connected in parallel with the adjustable resistance (20), wherein the peak current portion and the background current portion of the welding current flow through the output switch and the consumable welding electrode (16).

3. The welding system (10, 70) of claim 1 or 2, wherein the adjustable resistance (20) comprises a plurality of individually switched resistances connected in parallel,
wherein, preferably, the individually switched resistances have respective different resistance values, and/or
wherein, preferably, the individually switched resistances have resistance values less than 20 Ohms.

4. The welding system (10, 70) of any of the claims 1 to 3, wherein the power supply (12, 72) is configured to automatically adjust a resistance level of the adjustable resistance (20) based on a wire feed speed at which the feeder (40) advances the consumable welding electrode (16).

5. The welding system (10. 70) of any of the claims 1 to 4, wherein:
the adjustable resistance (20) comprises a series connection of a first transistor and a first resistor, and a series connection of a second transistor and a second resistor,
the series connection of the first transistor and the first resistor is connected in parallel with the series connection of the second transistor and the second resistor, and
the first resistor has a different resistance value than the second resistor.

6. The welding system (10, 70) of claim 5, further comprising an output transistor connected in parallel with the adjustable resistance (20).

7. A welding system (10, 70), comprising:
a consumable welding electrode (16);
a feeder (40) that advances the consumable welding electrode (16) toward a weld puddle during a welding operation; and
a power supply (12, 72) configured to provide a series of welding waveforms to the consumable welding electrode (16) to generate a welding current in the consumable welding electrode (16), wherein an individual welding waveform of said series includes:
a predetermined minimum current portion;
a peak current portion; and
a background current portion having a magnitude that is greater than the minimum current portion and less than the peak current portion,
wherein the power supply (12, 72) comprises:
an output switch;
an adjustable resistance (20) connected in parallel with the output switch; and
a controller (42) operatively connected to both of the output switch and the adjustable resistance (20), and configured to control switching operations of the output switch between an on state and an off state, and to control a resistance level of the adjustable resistance (20),
wherein the output switch is in the on state during the peak current portion and the background portion of the welding current, such that the peak current portion and the background current portion flow through the output switch and through the consumable welding electrode (16), and the output switch is in the off state during the minimum current portion of the welding waveform such that the minimum current portion flows through adjustable resistance (20) and through the consumable welding electrode (16).

8. The welding system (10, 70) of claim 7, wherein the adjustable resistance (20) comprises a plurality of individually switched resistances connected in parallel,
wherein, preferably, the individually switched resistances have respective different resistance values, and/or
wherein, preferably, the individually switched resistances have resistance values less than 20 Ohms.

9. The welding system (10, 70) of claim 7 or 8, wherein the controller (42) is configured to automatically adjust a resistance level of the adjustable resistance (20) based on a wire feed speed of said feeder (40).

10. The welding system (10, 70) of any of the claims 7 to 9, further comprising a second output switch and a second adjustable resistance connected in parallel with the second output switch, wherein the power supply (12, 72) is configured to provide AC welding waveforms to the consumable welding electrode (16).

11. The welding system (10, 70) of any of the claims 7 to 10, wherein:
the adjustable resistance (20) comprises a series connection of a first transistor and a first resistor, a series connection of a second transistor and a second resistor, and a series connection of a third transistor and a third resistor, and
the series connection of the first transistor and the first resistor is connected in parallel with the series connection of the second transistor and the second resistor, and is further connected in parallel with the series connection of the third transistor and the third resistor.

12. A welding system (10, 70), comprising:
a welding electrode (16);
a power supply (12, 72) configured to provide a series of welding waveforms to the welding electrode (16) to generate a welding current in the welding electrode (16), wherein an individual welding waveform of said series includes:
a predetermined minimum current portion;
a peak current portion; and
a background current portion having a magnitude that is greater than the minimum current portion and less than the peak current portion,
wherein the power supply (12, 72) comprises:
an output switch;
an adjustable resistance (20) comprising an array of individually switched resistances connected in parallel with the output switch; and
a controller (42) operatively connected to the output switch and to the array of individually switched resistances, and configured to control switching operations of the output switch, and to control a resistance level of the adjustable resistance by controlling activation of the individually switched resistances,
wherein the controller (42) controls the switching operations of the output switch and the activation of the individually switched resistances such that the peak current portion and the background current portion of the welding current flow through the output switch and the welding electrode, and the minimum current portion of the welding waveform flows through the adjustable resistance (20) and the welding electrode (16).

13. The welding system (10, 70) of claim 12, wherein the individually switched resistances have respective different resistance values wherein, preferably, the individually switched resistances have resistance values less than 20 Ohms.

14. The welding system (10, 70) of claim 12 or 13, further comprising a wire feeder (40) that feeds the welding electrode (16) at a wire feed speed, wherein the controller (42) is configured to automatically adjust a resistance level of the adjustable resistance (20) based on the wire feed speed.

15. The welding system (10, 70) of any of the claims 12 to 14, wherein:
the array of individually switched resistances comprises a series connection of a first transistor and a first resistor, a series connection of a second transistor and a second resistor, and a series connection of a third transistor and a third resistor, and
the series connection of the first transistor and the first resistor is connected in parallel with the series connection of the second transistor and the second resistor, and is further connected in parallel with the series connection of the third transistor and the third resistor.
